# EUROPÄISCHE PATENTSCHRIFT

(11) **EP 0 824 972 B1**
(45) Veröffentlichungstag und Bekanntmachung des Hinweises auf die Patenterteilung: **08.05.2002**
(21) Anmeldenummer: 97114182.5
(22) Anmeldetag: 18.08.1997
(51) Int. Cl.: B07B 9/00

(54) **Verfahren zum Trennen eines Feststoffgemisches**
Method for separating a mixture of solids
Procédé de séparation d'un mélange de matières solides

(30) Priorität: 23.08.1996 DE 19634026
(43) Veröffentlichungstag der Anmeldung: 25.02.1998
(73) Patentinhaber: BSR Naturstein-Aufbereitungs GmbH, 52224 Stolberg (DE)
(72) Erfinder: Conrads, Helmut, 52224 Stolberg (DE)
(74) Vertreter: Kohlmann, Kai, Dipl.-Ing.

(56) Entgegenhaltungen:
- DE-A- 4 217 479
- DE-A- 4 339 158
- KREJCIRIK MOJMIR: "Recycling von Betonschwellen bei der Tschechoslowakischen Staatsbahn" EISENBAHNINGENIEUR, Bd. 37, Nr. 2, 1986, Seiten 69-71, XP002087406

## Beschreibung

Die Erfindung betrifft ein Verfahren zum Trennen eines durch Zerkleinern von Beton-Schwellen mit darin zumindest enthaltenen Dübeln aus Holz oder Kunststoff gewonnenen Feststoffgemisches, das aus mindestens einer Fraktion von Dübeln und mindestens einer Fraktion von Betonbruchmaterial besteht.

In Anlehnung an die DIN 52 114 versteht man unter der Längserstreckung das größte Maß, das ein Korn in irgend einer Richtung hat und unter Korndicke den Abstand von zwei parallel angeordneten ebenen Flächen, durch die ein Korn gerade noch hindurchzubewegen ist. Ist die Längserstreckung eines Kornes kleiner als dessen dreifache Korndicke, bezeichnet man das Korn als kubisch. Ist die Längserstreckung größer als die dreifache Korndicke, bezeichnet man das Korn nach der Kornformbewertung für Betonzuschlag- und Straßenbaustoffe als fehlförmig, bzw. im Zusammenhang mit der Erfindung als länglich.

Ein Feststoffgemisch nach dem Oberbegriff des Anspruchs 1 fällt beim Aufbereiten von Betonschwellen für Eisenbahnschienen an. Mit Hilfe von Kleineisenteilen sind die Schienen an den Betonschwellen verschraubt. Die Schrauben greifen in Dübel aus Hartholz oder Kunststoff, die in die Betonschwelle eingelassen sind. Zwischen einer Eisenplatte und der Betonschwelle liegen bei einigen Betonschwellen Isolierplatten aus Gummi. Zwischen dem Schienenfuß und der Eisenplatte liegen zusätzlich teilweise Dämmplatten aus Weichholz oder Gummi.

Eine mechanisch aufgeschlossene Betonschwelle besteht daher aus etwa 280 - 340 kg Beton-Bruchmaterial sowie 4 bis 8 Dübeln und ggf. je zwei Isolier- und/oder Dämmplatten (Störstoffen). Weder die Größe, noch die Dichte oder Form der Dübel und anderen Störstoffe lassen mit herkömmlichen mechanischen Klassier- und Sortierverfahren eine Trennung mit akzeptabler Schärfe von dem Beton-Bruchmaterial zu.

Das verunreinigte Beton-Bruchmaterial ist jedoch nicht nur unverkäuflich, sondern verursacht darüber hinaus Kosten für die Entsorgung auf einer Deponie. Regional unterschiedlich schwanken die Deponiekosten etwa zwischen DM 300,00 und DM 600,00 je Tonne. Nimmt man einen durchschnittlichen Preis für die Deponiekosten von DM 500,00 je Tonne an, ergeben sich selbst bei optimaler Vorklassierung durchschnittliche Deponiekosten in Höhe von DM 60,00 je Betonschwelle. Wäre es demgegenüber möglich, die Störstoffe, die nach Erfahrungswerten etwa 1 kg je Schwelle ausmachen, vollständig abzutrennen, entstünden lediglich Verwertungskosten in Höhe von DM 0,50 je Betonschwelle. Gleichzeitig erhält man etwa 120 kg zusätzliches verkaufsfähiges Beton-Bruchmaterial, das zu einem durchschnittlichen Marktpreis von DM 15,00 je Tonne absetzbar ist.

Sowohl aus wirtschaftlichen Gründen als auch aus Gründen des Umweltschutzes ist daher eine vollständige Abtrennung der Störstoffe wünschenswert.

Versuche, die Störstoffe aus Beton-Bruchmaterial durch Windsichtung zu trennen, führten zu unbefriedigenden Trennerfolgen. Erste Erfolge erzielte eine Anordnung zum Trennen nach der Form gemäß der DE 195 26 841 C1 der Anmelderin, die für diese Anmeldung jedoch keinen Stand der Technik bildet. Die Anordnung trennt ein Feststoffgemisch aus Beton-Bruchmaterial und länglichen Dübeln auf einem Sieb mit einer Maschenweite für den Durchgang des Beton-Bruchmaterials. In einem Abstand zum Siebboden angeordnete Mittel, wie beispielsweise eine Abdeckplatte, begrenzen den Freiraum oberhalb des Siebbodens zumindest im Bereich der Sieböffnungen. Der Abstand der Abdeckplatte entspricht mindestens der größten Korndicke der kubischen Fraktion, ist jedoch in jedem Fall kleiner als die geringste Längserstreckung der Dübel, so daß diese sich beim Absieben nicht aufrichten und durch das Sieb fallen können. Diese Anordnung eignet sich jedoch nur dann, wenn das Beton-Bruchmaterial soweit vorklassiert ist, daß die längste Längserstreckung des Beton-Bruchmaterials in jedem Fall kleiner als der kürzeste Dübel ist. Diese Anordnung hat sich in der Praxis als zuverlässig erwiesen, verursacht jedoch beim Durchsatz großer Volumenströme hohe Kosten.

Ferner ist es aus der DE 43 39 158 A1 bekannt, zum Abtrennen von Metallen aus Stoffgemischen, das Gemisch sowohl einer Walz-Quetschbehandlung als auch einer zusätzlichen, reibenden und scherenden Kraft zu unterziehen und die metallischen Bestandteile von dem übrigen Stoffgemisch abzusieben. Die scherende und reibende Beanspruchung setzt eine Trocknung des Stoffgemisches auf einen Feuchtigkeitsgehalt von weniger als 5 % voraus. Die durch mühlenähnliche Vorrichtungen auf das Stoffgemisch ausgeübten Kräfte verformen die metallischen Bestandteile und vergrößern damit deren Querschnitt, während die nicht-metallischen Bestandteile zerkleinert werden und abgesiebt werden können.

In der Veröffentlichung von Krejcirik Mojmir "Recycling von Betonschwellen bei der Tschechoslowakischen Stattsbahn" EISENBAHNINGENIEUR Bd. 37, Nr. 2, 1986, Seiten 69-71, XP002087406 wird ein Verfahren zum Recycling von Betonschwellen beschrieben, bei dem die Schwellen mittels eines primären Brecher zerkleinert werden. Der Betonbruch daraus läuft über ein Förderband, an dem die Dübel per Hand entfernt werden, in eine Siebanlage von dem lediglich die Korngruppe mit Körnern größer 16 mm mittels Förderband in einen Sekundären Brecher geführt werden. Der daraus entstandene Split wird über Band zurück zur Siebanlage geführt.

Der Erfindung liegt die Aufgabe zugrunde, ein Verfahren zum Trennen eines Feststoffgemisches der eingangs erwähnten Art zu schaffen, das mit geringem Aufwand einen guten Trennerfolg zumindest zwischen den länglichen Dübeln und dem kubischen Betonbruchmaterial gewährleistet.

Da die geometrischen Unterschiede zwischen den länglichen Dübeln und dem kubischen Betonbruchmaterial nicht geeignet sind, um einen hinreichenden Trennerfolg zu erzielen, nutzt die Erfindung unter anderem die unterschiedliche Widerstandsfähigkeit der Körnungen bei übereinstimmenden zerkleinerungswirksamen Beanspruchungen.

Im einzelnen wird die Aufgabe dadurch gelöst, daß das Feststoffgemisch vorklassiert wird, indem in das Überkorn zumindest kubisches Beton-Bruchmaterial gelangt, dessen geringste Dicke größer als die größte Dicke der Dübel ist, während das kubische Beton-Bruchmaterial mit geringerer Dicke zumindest teilweise mit den länglichen Dübeln in das Feinkorn geht, das ausschließlich kubisches Beton-Bruchmaterial enthält, dessen größte Längserstreckung höchstens zwei mal so groß ist, wie die geringste Längserstreckung der Dübel, das Feinkorn des Feststoffgemisches einer Zerkleinerungsmaschine zugeführt wird, die das Feinkorn überwiegend auf Schlag beansprucht, deren Betriebsparameter so eingestellt werden, daß aufgrund der zerkleinerungswirksamen Beanspruchung das kubische Beton-Bruchmaterial zerbricht, während die länglichen Dübel zumindest quer zu ihrer Längserstreckung nicht zerbrechen, sondern allenfalls verformt werden, und das im Kegelbrecher zerbrochene Beton-Bruchmaterial anschließend mit den Dübeln mit zumindest unveränderter Längserstreckung mindestens einem Sieb zugeführt werden (Nachklassierung), durch das das zerbrochene Betonbruchmaterial hindurchgeht, während die Dübel als überkorn zurückgehalten werden.

Das genaue Einstellen der Betriebsparameter (z.B. Drehzahl, Brechkegelneigung oder Spaltmaß) auf das abweichende Brechverhalten der Dübel bewirkt, daß lediglich das kubische Beton-Bruchmaterial zerbricht, während die Dübel allenfalls gequetscht oder in Längsrichtung gespalten werden, jedoch keinesfalls quer zur Längsrichtung zerbrechen. Infolge der selektiven Zerkleinerung lassen sich die geometrischen Unterschiede zwischen den Dübeln und kubischen Körnern des Betonbruchmaterials so stark verändern, daß sie mit hinreichendem Trennerfolg auf einem Sieb trennbar sind.

Praktisch keinerlei Dübel oder andere Störstoffe befinden sich mehr im Beton-Bruchmaterial, wenn die Betriebsparameter der Zerkleinerungsmaschine so eingestellt werden, daß die geringste Längserstreckung der Dübel größer oder gleich der zweifachen größten Längserstreckung des nachzerkleinerten Beton-Bruchmaterials ist.

Insbesondere ein Flachkegelbrecher hat sich als vorteilhaft herausgestellt. Die überwiegende Schlagbeanspruchung kann die Holz- oder Kunststoffdübel nicht zerbrechen. Infolge des großen Neigungswinkels des Kegels wird jedoch das Beton-Bruchmaterial bis zum Austrag sehr häufig belastet und gut zerkleinert. Schließlich läßt der Flachkegelbrecher eine sehr genaue Einstellung der gewünschten Endkorngröße für das Beton-Bruchmaterial zu.

Wenn das in dem Kegelbrecher nachzerkleinerte Beton-Bruchmaterial auf mindestens einem weiteren Siebboden unterschiedlicher Trennweite nachklassiert wird, läßt sich die verkaufsfähige Fraktion des Beton-Bruchmaterials in einem Arbeitsgang in zwei Fraktionen unterschiedlicher Körnung aufteilen.

Vorzugsweise ist der weitere Siebboden Bestandteil eines Mehrdecksiebes.

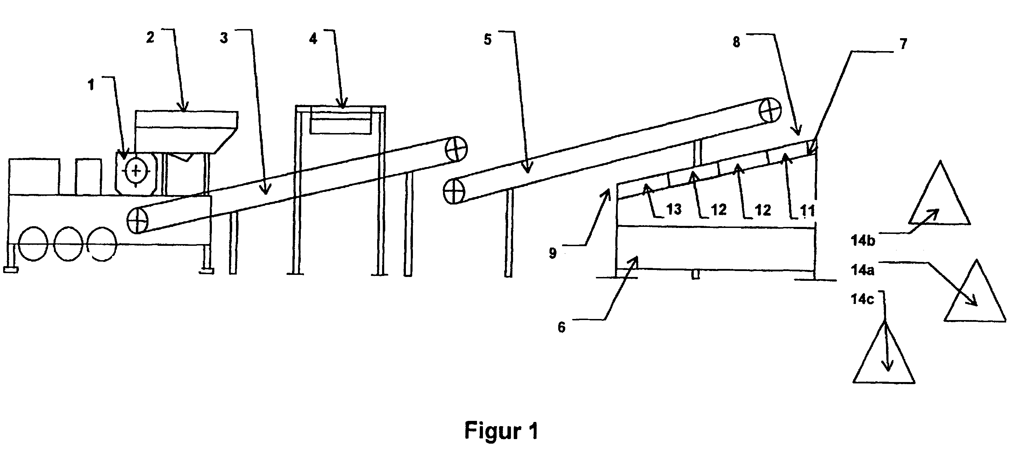

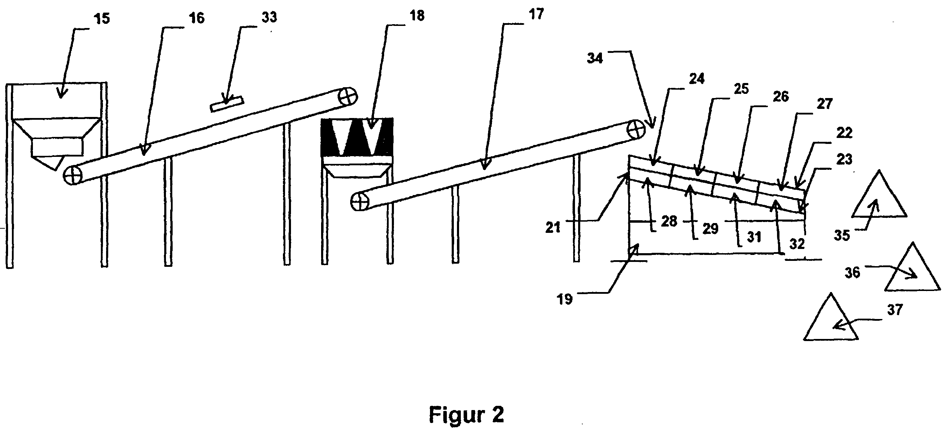

Nachfolgend wird die Erfindung anhand der Figuren 1 und 2 näher erläutert.

Es zeigen
- Figur 1:: eine schematische Darstellung des ersten Teils einer Anordnung zum Durchführen des erfindungsgemäßen Verfahrens und
- Figur 2:: eine schematische Darstellung des zweiten Teils einer Anordnung zum Durchführen des erfindungsgemäßen Verfahrens.

Die Anordnung nach Figur 1 umfaßt im wesentlichen eine Prallmühle 1 mit einer Aufgaberinne 2, Förderbänder 3, 5, einen Überbandmagnet 4 sowie eine Klassierstation 6 mit einem Siebboden 7.

Von einer Aufgabe 8 bis zu einem Überlauf 9 unterteilt sich der Siebboden 7 in vier Abschnitte. An ein Gummisieb 11 mit quadratischen Maschen von 45 mm schließen sich zwei Lochblechsiebe 12 mit kreisförmigen Öffnungen mit einem Durchmesser von 45 mm an. Das Lochblechsieb 12 geht schließlich in ein Stegsieb 13 über. Der Abstand zwischen den einzelnen Stegen beträgt mindestens 50 mm. In Richtung des Überlaufs 9 laufen die Stege etwas auseinander, um ein Verklemmen von Siebgut zu verhindern.

Arbeitsweise der Anordnung nach Figur 1:

Ein nicht dargestellter Hydraulikbagger schneidet mit einer Betonschere in der Figur 1 ebenfalls nicht dargestellte Betonschwellen etwa in der Mitte durch. Ein Radlader nimmt die halbierte Betonschwelle in seinem Grabgefäß auf und entlädt sie in die Aufgaberinne 2 der Prallmühle 1. Die Betonschwellen enthalten zur Aufnahme von Schrauben Dübel aus Hartholz oder aus Kunststoff. Außerdem haften der Betonschwelle gelegentlich Dämmplatten aus Weichholz oder aus Gummi an. Schließlich sind die Betonschwellen zur Vorspannung mit Rundstählen bewehrt, um den unterschiedlichen Lastangriffsfällen gewachsen zu sein. Außerdem können sich ungelöste Kleineisenteile zur Befestigung des Schienenfußes an den Betonschwellen befinden.

Die zerkleinerten Betonschwellen, die Stahlbewehrung, die Hartholz- bzw. Kunststoffdübel sowie die übrigen Kleineisenteile fallen unten aus der Prallmühle 1. Das Förderband 3 transportiert das Bruchmaterial ab. Der oberhalb des Förderbandes 3 angeordnete Überbandmagnet 4 scheidet die Stahlbewehrung und die Kleineisenteile ab. Nachdem das Bruchmaterial den Überbandmagnet 4 passiert hat, befinden sich nur noch Beton-Bruchmaterial, Dübel und ggf. Isolier- oder Dämmplatten aus Gummi oder Weichholz auf dem Förderband 3. Nach Übergabe dieses Materials vom Förderband 3 auf das weitere Förderband 5 gelangt das Beton-Bruchmaterial einschließlich der Dübel und Platten zur Aufgabe 8 der Klassierstation 6.

Die Klassierstation 6 ist beispielsweise ein Schwingsieb mit einem an Lenkern befestigten Siebkasten. Das auf den Siebboden 7 aufgegebene Bruchmaterial bewegt sich infolge der Schwingungen über das Gummisieb 11, die Lochblechsiebe 12 sowie das Stegsieb 13.

Im Feinkorn des Gummisiebes 11 und der Lochblechsiebe 12 befindet sich Beton-Bruchmaterial 14b in einer Körnung von 0 - 45 mm. Durch das Stegsieb 13 geht Beton-Bruchmaterial 14a in einer Körnung von 45 - 70 mm zusammen mit den Dübeln und Platten unabhängig von ihrer Größe hindurch. Im Überkorn 14c des Stegsiebes 13 befindet sich Beton-Bruchmaterial in einer Körnung von 70 mm und größer einschließlich vereinzelter Dübel- und Platten. Das Überkorn wird erneut mit dem Radlader über die Aufgaberinne 2 in die Prallmühle 1 gegeben.

Das Beton-Bruchmaterial 14b mit einer Körnung von 0 - 45 mm bedarf keiner weiteren Aufbereitung. Das mit Dübeln und Platten versehene Beton-Bruchmaterial 14a mit einer Körnung von 45 - 70 mm ist auf herkömmlichem Wege nicht voneinander zu trennen.

Diese Fraktion wird daher der in Figur 2 gezeigten Anordnung zugeführt. Sie besteht im wesentlichen aus einem Aufgabebunker 15, Förderbändern 16, 17, einem zwischen den Förderbändern 16, 17 angeordneten Flachkegelbrecher 18 und einer dem Förderband 17 nachgeschalteten Klassierstation 19.

Die Klassierstation 19 bildet ein Zweidecksieb 21, das ein Antrieb in Schwingungen versetzt. Das Zweidecksieb 21 besitzt einen oberen und einen unteren Siebboden 22, 23, deren Siebabschnitte 24 - 27 bzw. 28 - 32 in steigender Masche angeordnet sind. Die Anordnung in steigender Masche erleichtert das Absieben des Feinkorns. Im einzelnen untergliedert sich der obere Siebboden 22 in ein Gummisieb 24 mit einer Trennweite von 20 mm, dem sich drei Metallsiebe 25, 26, 27 jeweils mit einer Trennweite von 32 mm anschließen. Im darunterliegenden unteren Siebboden 23 befinden sich hintereinander je zwei Metallsiebe 28, 29, 31, 32 mit einer Trennweite von 10 bzw. 18 mm. Zwischen dem Aufgabebunker 15 und dem Flachkegelblechbrecher 18 befindet sich über dem Förderband 16 ein weiterer Überbandmagnet 33. Er zieht Kleineisenmaterial an, das der Überbandmagnet 4 aus den vorzerkleinerten Betonschwellen nicht entfernt hat.

Die Neigung des in der Figur nicht gezeigten Brechkegels des Flachkegelbrechers 18 beträgt etwa 45°. Die durch diese Geometrie bedingten großen Hübe bei der Kegelauslenkung beanspruchen das Feststoffgemisch aus Beton-Bruchmaterial, Dübeln und Matten überwiegend durch Schlag.

Während die gegenüber der Schlagbeanspruchung widerstandsfähigeren Dübel praktisch unverändert, allenfalls verformt oder in Längsrichtung gespalten, den Flachkegelbrecher verlassen, wird das Beton-Bruchmaterial erheblich nachzerkleinert.

Aufgrund der Einstellung der Betriebsparameter des Flachkegelbrechers 18 ist am Austrag der kürzeste Dübel von etwa 130 mm etwa vier mal größer als die größte Längserstreckung des zerbrochenen Beton-Bruchmaterials von 32 mm. Damit sind die Größenunterschiede zwischen den länglichen Dübeln einerseits und dem kubischen Beton-Bruchmaterial andererseits ausreichend, um im Wege einer Nachklassierung die Dübel vollständig von dem Beton-Bruchmaterial zu trennen.

Das aus dem Flachkegelbrecher 18 ausgetragene Gut befördert das Band 17 zur Aufgabe 34 der Klassierstation 19. Im Überkorn 35 des oberen Siebbodens 22 befindet sich die Körnung größer 32 mm, also ausschließlich die Dübel und ggf. Matten(teile), die direkt in einen in der Zeichnung nicht dargestellten Abfallcontainer abgeworfen werden. Durch den oberen Siebboden 22 hindurch geht Beton-Bruchmaterial einer Körnung von 0 - 32 mm. Der darunter befindliche untere Siebboden 23 trennt aus dieser Fraktion von Beton-Bruchmaterial mit den Metallsieben 28 - 32 Beton-Bruchmaterial in einer Körnung von 0 - 16 mm 36 ab.

Die Fraktionen 0 - 16 mm 36 und 16 - 32 mm 37 des Beton-Bruchmaterials werden aufgehaldet und stehen als verkaufsfähiges Produkt zur Verfügung.

| **Bezugszeichenliste** | | | |
|---|---|---|---|
| **Nr.** | **Bezeichnung:** | **Nr.** | **Bezeichnung** |
| 1 | Prallmühle | 20 | --- |
| 2 | Aufgaberinne | 21 | Zweidecksieb |
| 3 | Förderband | 22 | oberer Siebboden |
| 4 | Überbandmagnet | 23 | unterer Siebboden |
| 5 | Förderband | 24 | Gummisieb 20 mm |
| 6 | Klassierstation | 25 | Metallsieb 32 mm |
| 7 | Siebboden | 26 | Metallsieb 32 mm |
| 8 | Aufgabe | 27 | Metallsieb 32 mm |
| 9 | Überlauf | 28 | Metallsieb 10 mm |
| 10 | --- | 29 | Metallsieb 10 mm |
| 11 | Gummisieb 45 mm | 30 | --- |
| 12 | Lochblechsieb 45 mm | 31 | Metallsieb 18 mm |
| 13 | Stegsieb | 32 | Metallsieb 18 mm |
| 14a | Beton-Bruchmaterial 45-70 mm und Störstoffe | 33 | Überbandmagnet |
| 14b | Beton-Bruchmaterial 0-45 mm | | |
| 14c | Überkorn | | |
| 15 | Aufgabebunker | 34 | Aufgabe |
| 16 | Förderband | 35 | Überkorn |
| 17 | Förderband | 36 | Beton-Bruchmaterial 0-16 mm |
| 18 | Flachkegelbrecher | 37 | Beton-Bruchmaterial 16-32 mm |
| 19 | Klassierstation | | |

## Patentansprüche

1. Verfahren zum Trennen eines durch Zerkleinern von Beton-Schwellen mit darin zumindest enthaltenen Dübeln aus Holz oder Kunststoff gewonnen Feststoffgemisches, das aus mindestens einer Fraktion von Dübeln und mindestens einer Fraktion von Betonbruchmaterial besteht, wobei
- das Feststoffgemisch vorklassiert wird, indem in das Überkorn (14c) zumindest kubisches Beton-Bruchmaterial gelangt, dessen geringste Dicke größer als die größte Dicke der Dübel ist, während das kubische Beton-Bruchmaterial mit geringerer Dicke zumindest teilweise mit den länglichen Dübeln in das Feinkorn (14a) geht, das ausschließlich kubisches Beton-Bruchmaterial enthält, dessen größte Längserstreckung höchstens zwei mal so groß ist, wie die geringste Längserstreckung der Dübel,
- das Feinkorn (14a) des Feststoffgemisches einer Zerkleinerungsmaschine zugeführt wird, die das Feinkorn (14a) überwiegend auf Schlag beansprucht,
- deren Betriebsparameter so eingestellt werden, daß aufgrund der zerkleinerungswirksamen Beanspruchung das kubische Beton-Bruchmaterial zerbricht, während die länglichen Dübel zumindest quer zu ihrer Längserstreckung nicht zerbrechen, sondern allenfalls verformt werden und
- das in der Zerkleinerungsmaschine zerbrochene Beton-Bruchmaterial anschließend mit den Dübeln mit zumindest unveränderter Längserstreckung mindestens einem Sieb (21) zugeführt werden (Nachklassierung) (19), durch das das zerbrochene Betonbruchmaterial (36, 37) hindurchgeht, während die Dübel als Überkorn (35) zurückgehalten werden.

2. Verfahren nach Anspruch 1, **dadurch gekennzeichnet, daß** die Betriebsparameter der Zerkleinerungsmaschine so eingestellt werden, daß die geringste Längserstreckung der Dübel größer oder gleich der zweifachen größten Längserstreckung des im Kegelbrecher zerbrochenen Beton-Bruchmaterials ist.

3. Verfahren nach Anspruch 1 oder 2, **dadurch gekennzeichnet, daß** das Feinkorn (14a) des Feststoffgemisches einer als Flachkegelbrecher (18) ausgebildeten Zerkleinerungsmaschine zugeführt wird.

4. Verfahren nach einem der Ansprüche 1 bis 3, **dadurch gekennzeichnet, daß** das in der Zerkleinerungsmaschine zerbrochene Beton-Bruchmaterial auf mindestens einem weiteren Siebboden (23) unterschiedlicher Trennweite nachklassiert wird, der vorzugsweise Bestandteil eines Mehrdecksiebs (21) ist.

5. Verfahren nach einem der Ansprüche 1 bis 4, **dadurch gekennzeichnet,**
- **daß** die zerkleinerten Beton-Eisenbahnschwellen auf mindestens einen Öffnungen für den Durchgang eines Teils des kubischen Beton-Bruchmaterials (14 b) aufweisenden Siebboden (11, 12) aufgegeben werden, wobei die Öffnungen des Siebbodens kleiner als die geringste Dicke der Dübel sind,
- anschließend das auf dem Siebboden (11, 12) zurückgehaltene Überkorn der zerkleinerten Beton-Eisenbahnschwellen auf ein Stegsieb (13) aufgegeben wird, dessen Abstand zwischen den Stegen mindestens der größten Dicke der Dübel entspricht, so daß zumindest kubisches Beton-Bruchmaterial in das Überkorn (14c) gelangt, dessen geringste Dicke größer als die größte Dicke der Dübel ist, während das kubische Beton-Bruchmaterial mit geringerer Dicke zumindest teilweise mit den länglichen Dübeln in das Feinkorn (14a) geht,

## Claims

1. A method for separating a solid mixture obtained by crushing concrete ties having pins made of wood or plastic at least partially contained in them, which comprises at least one fraction of pins and at least one fraction of crushed concrete material, wherein
- the solid material is preclassified in that at least cubical crushed concrete material, whose smallest thickness is greater than the greatest thickness of the pins, reaches the oversize material (14c), while the cubical crushed concrete material with lower thickness goes at least partially with the oblong pins in the fine material (14a), which exclusively includes cubical crushed concrete material whose greatest lengthwise extension is at most twice as great as the smallest lengthwise extension of the pins,
- the fine material (14a) of the solid mixture is fed to a crushing machine which subjects the fine material (14a) predominantly to impact,
- whose operating parameters are set in such a way that, due to the stress which causes crushing, the cubical crushed concrete material breaks into pieces, while the oblong pins, at least transverse to their lengthwise extension, do not break into pieces, but are possibly deformed, and
- the crushed concrete material broken into pieces in the crushing machine is subsequently, with the pins having at least unchanged lengthwise extension, fed to at least one sieve (21) (reclassification) (19), through which the crushed concrete material broken into pieces (36, 37) passes, while the pins are held back as oversize material (35).

2. A method according to claim 1, **characterized in that** the operating parameters of the crushing machine are set in such a way that the smallest lengthwise extension of the pins is greater than or equal to twice the greatest lengthwise extension of the crushed concrete material broken into pieces in the cone crusher.

3. A method according to claim 1 or 2, **characterized in that** the fine material (14 a) of the solid mixture is fed to a crushing machine implemented as a flat cone crusher (18).

4. A method according to one of the claims 1 to 3, **characterized in that** the crushed concrete material broken into pieces in the crushing machine is reclassified on at least one further sieve plate (23) of varying separation widths, which is preferably a component of a multideck sieve (21).

5. A method according to one of the claims 1 to 4, **characterized in that**
- the crushed concrete railroad ties are fed to at least one sieve plate (11, 12) having openings for the passage of a part of the cubical crushed concrete material (14b), with the openings of the sieve plate being smaller than the smallest thickness of the pins,
- subsequently, the oversize material of the crushed concrete railroad ties kept back on the sieve plates (11, 12) is fed to a ribbed sieve (13), whose distance between the ribs corresponds to at least the greatest thickness of the pins, so that at least cubical crushed concrete material whose smallest thickness is greater than the greatest thickness of the pins reaches the oversize material (14c), while the cubical crushed concrete material with smaller thickness is at least partially reaches the fine material (14a) with the oblong pins,

## Revendications

1. Procédé pour la séparation d'un mélange de matières solides, obtenu par concassage de traverses de béton, contenant au moins des bûchettes de bois ou plastique, qui consiste en au moins une fraction de bûchettes et au moins une fraction de déchets de béton,
- le mélange de matières solides étant pré-trié, en mettant au moins les déchets cubiques de béton parmi les granulés grossiers (14c), dont la grosseur la plus faible est supérieure à la grosseur la plus importante des bûchettes, alors que les fragments cubiques de moindre grosseur sont mis au moins partiellement avec les bûchettes longitudinales dans les granulés fins (14a), qui contient exclusivement des déchets cubiques de béton dont l'extension longitudinale la plus importante est au plus deux fois plus importante que la plus faible extension longitudinale des bûchettes,
- les granulés fins (14a) du mélange de matière solide étant acheminés jusqu'à un concasseur qui traite surtout les granulés fins (14a) par battage,
- les paramètres d'exploitation étant fixés de manière à ce que, en raison du traitement de concassage, les déchets cubiques de béton se cassent, alors que les bûchettes longitudinales ne se cassent pas, du moins perpendiculairement à leur extension longitudinale, mais sont dans tous les cas déformées,
- les déchets de béton broyés dans le concasseur étant ensuite acheminés avec les bûchettes avec au moins une extension longitudinale inchangée jusqu'à un crible (21) (re-triage) (19), à travers lequel passent les déchets de béton concassés (36, 37), alors que les bûchettes sont retenues en tant que granulés grossiers (35).

2. Procédé selon la revendication 1, **caractérisé en ce que** les paramètres d'exploitation du concasseur sont réglés de manière à ce que l'extension longitudinale la plus faible des bûchettes est supérieure ou égale au double de la plus grande extension longitudinale des déchets de béton broyés dans le concasseur à cône.

3. Procédé selon la revendication 1 ou 2, **caractérisé en ce que** les granulés fins (14a) du mélange de matières solides sont acheminés jusqu'à un concasseur du type concasseur plan à cône (18).

4. Procédé selon une des revendications 1 à 3, **caractérisé en ce que** les déchets de béton broyés dans le concasseur sont re-triés sur au moins un fond de crible (23) supplémentaire d'un calibre de tri différent, qui fait de préférence partie d'un crible à plusieurs niveaux (21).

5. Procédé selon une des revendications 1 à 4, **caractérisé en ce que**
- les traverses de chemin de fer en béton concassées sont versées sur au moins un fond de crible (11, 12) présentant des orifices pour le passage d'une partie des déchets cubiques de béton (14b), les orifices du fond du crible étant plus petits que la grosseur la plus faible des bûchettes,
- les granulés grossiers retenus sur le fond de crible (11, 12) des traverses de chemin de fer en béton concassées sont ensuite versés sur un crible à étages (13) dont l'écart entre les étages équivaut à au moins la plus forte grosseur des bûchettes, de manière à ce qu'au moins des déchets cubiques de béton dont la grosseur la plus faible est plus importante que la grosseur la plus importante des bûchettes parviennent dans les granulés grossiers (14c), alors que les déchets cubiques de béton d'une moindre grosseur rejoignent au moins partiellement, avec les bûchettes longitudinales, les granulés fins (14a).
